# EUROPÄISCHE PATENTSCHRIFT

(11) **EP 2 246 204 B1**
(45) Veröffentlichungstag und Bekanntmachung des Hinweises auf die Patenterteilung: **30.04.2014**
(21) Anmeldenummer: 10168511.3
(22) Anmeldetag: 22.10.2008
(51) Int. Cl.: B60G 3/20, B60G 7/00, B62D 7/18

(54) **Einzelradaufhängung**
Independent wheel suspension
Suspension à roues indépendantes

(30) Priorität: 15.11.2007 DE 102007047788
(43) Veröffentlichungstag der Anmeldung: 03.11.2010
(62) Teilanmeldung aus: 08848629.5
(73) Patentinhaber: ZF Friedrichshafen AG, 88038 Friedrichshafen (DE)
(72) Erfinder: Gell, Klaus, 94130 Obernzell (DE); Wimmer, Hans, 94127 Neuburg (DE); Solka, Ulrich, 94081 Fürstenzell (DE)

(56) Entgegenhaltungen:
- EP-A- 1 837 210
- WO-A-2005/091699
- DE-A1- 3 034 092
- DE-A1-102004 014 555
- DE-C- 943 930
- US-A- 2 057 372

## Beschreibung

Die vorliegende Erfindung bezieht sich auf eine Einzelradaufhängung gemäß dem Oberbegriff des Patentanspruchs 1.

Aus der WO 2005/091699 A1 der Anmelderin ist beispielsweise eine Radaufhängung für ein lenkbares Fahrzeugrad bekannt, mit einem um eine Drehachse drehbar angeordneten Achsschenkel, welcher sich auf einem Träger abstützt, wobei der Träger über ein Feder-Dämpfer-Modul mit dem Fahrzeugrahmen verbunden ist.

Die bekannte Radaufhängung weist einen koaxial zur Drehachse angeordneten Achsschenkelbolzen, mindestens einen oberen Querlenker und mindestens einen unteren Querlenker auf, wobei die Querlenker mit dem Fahrzeugrahmen und über mindestens ein Verbindungsmittel mit dem Achsschenkel in Verbindung stehen. Gemäß der WO 2005/091699 A1 ist der Träger über eine koaxial zur Drehachse angeordnete Lagerung mit dem Achsschenkel verbunden, wobei die Verbindungsmittel koaxial zur Drehachse angeordnet sind und wobei die Querlenker mit den Verbindungsmitteln verbunden sind.

Des weiteren ist aus der DE 10 2004 014 555 A1 der Anmelderin eine Radaufhängung für ein lenkbares Fahrzeugrad bekannt, mit einem um eine Drehachse drehbar angeordneten Achsschenkel, der über einen Achsschenkelbolzen mit einem oberen Querlenker und einem unteren Querlenker in Verbindung steht, mit einem oberen Querlenkerlager und einem unteren Querlenkerlager, über die die Querlenker mit dem Achsschenkel, in Verbindung stehen, bei der mindestens ein Querlenker einen am Querlenkerlager beginnenden Abschnitt aufweist, bei dem der Querlenker in seiner Breite nahezu gleich bleibt oder sich verschmälert. Vorzugsweise wird dieser Abschnitt durch sich überkreuzende oder durchdringende Querlenker erreicht.

Ferner ist aus der DE 100 30 028 A1 der Anmelderin eine Radaufhängung für ein gelenktes Rad eines Kraftfahrzeugs bekannt. Die bekannte Radaufhängung weist einen Radträger auf, welcher über obere Lenker und untere Lenker mit einem Chassis eines Kraftfahrzeugs verbunden ist, wobei der Radträger direkt mit einem Federträger verbunden ist. Hierbei ist der Federträger drehbar im Radträger gelagert, wobei durch die Verwendung eines Bolzens, welcher einerseits mit dem Federträger und andererseits mit dem Radträger verbunden ist, eine kompakte Radaufhängung realisiert wird.

Im Rahmen der DE 102 52 135 A1 der Anmelderin ist eine Einzelradaufhängung für Kraftfahrzeuge, insbesondere für NKWs, umfassend Achsquerlenker und Achslängslenker, beschrieben, bei der zumindest die hauptbeanspruchten Lenkerarme und -streben der Quer- und Längslenker in jedem Bereich einen Ellipsenquerschnitt aufweisen.

Der vorliegenden Erfindung liegt die Aufgabe zugrunde, ausgehend von dem erwähnten Stand der Technik, eine Einzelradaufhängung anzugeben, bei der der Achsschenkelbolzen hinsichtlich der Funktionalität optimiert wird und die axiale und/oder radiale Fixierung des Federträgers und des Achsschenkelbolzens an sich sowie zueinander auf einfache Weise realisiert wird.

Diese Aufgabe wird durch die Merkmale des Patentanspruchs 1 gelöst.

Demnach wird eine Einzelradaufhängung vorgeschlagen, mit einem um eine Drehachse drehbar angeordneten Achsschenkel, welcher sich auf einem Federträger abstützt, der über einen Dämpfer und eine Luftfeder oder über ein Feder-Dämpfer-Modul mit dem Fahrzeugrahmen verbunden ist, wobei der Achsschenkel über einen Achsschenkelbolzen mit dem Federträger verbunden ist.

Hierbei weist die Einzelradaufhängung mindestens einen oberen Querlenker und mindestens einen unteren Querlenker auf, wobei die Querlenker am oberen Ende bzw. am unteren Ende des Achsschenkelbolzens gelagert sind, wobei der Achsschenkel und die Querlenker schwenkbar zum Achsschenkelbolzen gelagert und der Federträger drehfest mit dem Achsschenkelbolzen verbunden ist.

Die Erfindung wird im folgenden anhand der beigefügten Figuren bei. spielhaft näher erläutert, wobei gleiche Bauteile mit gleichen Bezugszeichen bezeichnet sind. Es zeigen:
- Figur 1:: Eine schematische Ansicht einer Einzelradaufhängung gemäß der WO 2005/091699 A1 der Anmelderin, umfassend ein Luftfeder-Dämpfer-Modul;
- Figur 2:: Eine schematische Ansicht einer Einzelradaufhängung gemäß der WO 2005/091699 A1 der Anmelderin, umfassend eine Luftfeder und einen Dämpfer;
- Figur 12:: Eine perspektivische Ansicht des Achsschenkelbolzens;
- Figur 13:: Eine perspektivische Ansicht einer vorteilhaften erfindungsgemäßen Ausgestaltung des Achsschenkelbolzens und der Anbindung der Quergelenklagerungen;
- Figur 14:: Eine perspektivische Ansicht einer weiteren vorteilhaften erfindungsgemäßen Ausgestaltung des Achsschenkelbolzens und der Anbindung der Quergelenklagerungen;

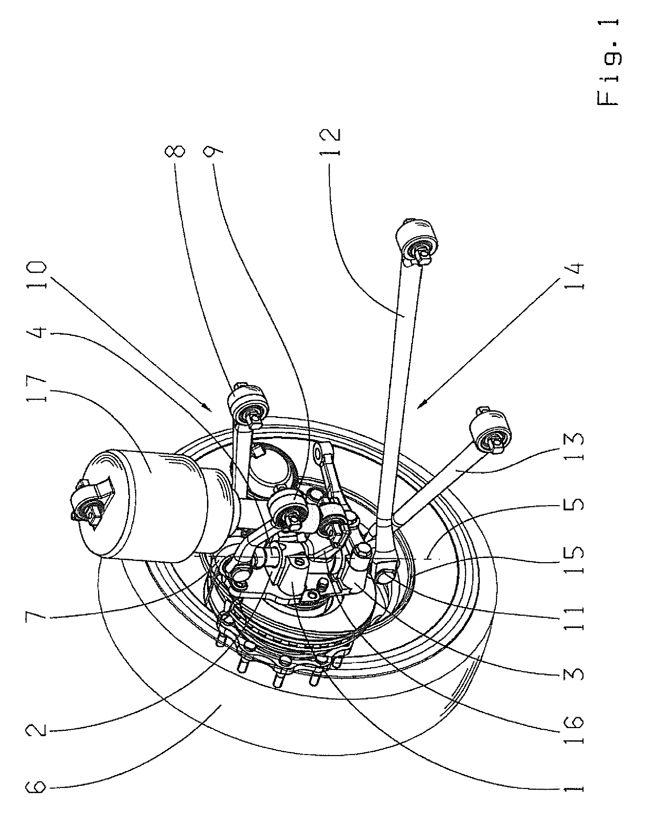

In Figur 1 ist eine Radaufhängung gemäß der WO 2005/091699 A1 der Anmelderin, umfassend ein Feder-Dämpfer-Modul schematisch dargestellt.

Hierbei weist der Achsschenkel 1 eine obere Aufnahme 2 und eine untere Aufnahme 3 auf, in welcher sich ein Achsschenkelbolzen 4 befindet, welcher koaxial zu einer Drehachse 5 angeordnet ist. Auf diese Weise kann sich der Achsschenkel 1 um die Achse 5 drehen, um Lenkbewegungen für das Fahrzeugrad 6 auszuführen.

Bei dem in Figur 1 gezeigten Beispiel weist der Achsschenkelbolzen 4 an seinem oberen Ende eine Lagerung 7 auf, welche beispielsweise als Rollenlagerung, Gleitlagerung, Kugelgelenk oder als Molekulargelenk ausgeführt sein kann, und über welche ein erster Arm 8 und ein zweiter Arm 9 eines oberen Querlenkers 10 verbunden sind. Des weiteren weist der Achsschenkelbolzen 4 an seinem unteren Ende eine Lagerung 11 auf, welche wie die Lagerung 7 ausgeführt sein kann und über die ein erster Arm 12 und ein zweiter Arm 13 eines unteren Querlenkers 14 verbunden sind. Indem die oberen Querlenker 10 und die unteren Querlenker 14 direkt mit dem Achsschenkelbolzen 4 verbunden sind, verlängern sich die Querlenker, was zu einer Verbesserung der Feder-Kinematik führt. Vorzugsweise sind die Lagerungen 7 und 11 innerhalb der Felge 15 angeordnet.

Zwischen der oberen Aufnahme 2 und der unteren Aufnahme 3 ist ein Träger bzw. Federträger 16 angeordnet, welcher mit einem Feder-Dämpfer-Modul 17 verbunden ist, so dass sich der Achsschenkel 1 über den Federträger bzw. den Träger 16 und das Feder-Dämpfer-Modul 17 an einem nicht dargestellten Fahrzeugrahmen abstützt. Der erste Arm 8 und der zweite Arm 9 sowie der erste Arm 12 und der zweite Arm 13 sind ebenfalls an einem nicht dargestellten Fahrzeugrahmen angelenkt. Wie aus Figur 1 ersichtlich sind der erste Arm 12 und der zweite Arm 13 überkreuzt angeordnet, wodurch der mögliche Lenkwinkel erhöht werden kann. Hierbei ist das Feder-Dämpfer-Modul 17 außerhalb des Fahrzeugrahmens und oberhalb des oberen Querlenkers 10 angeordnet.

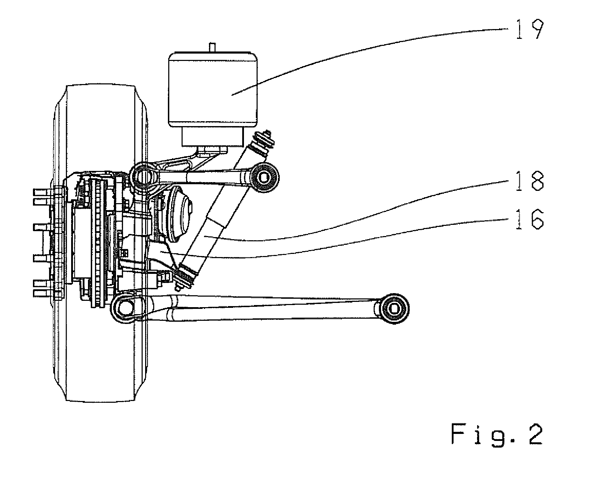

In Figur 2 ist eine Radaufhängung gezeigt, deren prinzipieller Aufbau dem Aufbau der in Figur 1 gezeigten Radaufhängung entspricht, mit dem Unterschied, dass anstelle des Feder-Dämpfer-Moduls 17 ein separater Dämpfer 18 und eine separate Luftfeder 19 verwendet werden. Auch in diesem Fall ist die Luftfeder 19 außerhalb des Fahrzeugrahmens und oberhalb des oberen Querlenkers 10 angeordnet. In den gezeigten Beispielen erfolgt die Abstützung der Radaufstandskraft zum Träger bzw. Federträger 16 und somit zum Fahrzeugrahmen über ein Axiallager.

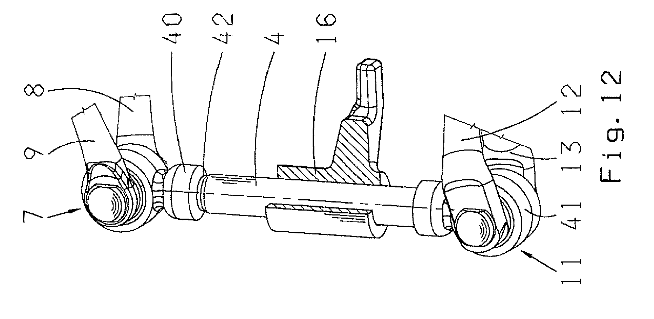

Bei einer einteiligen Ausführung des Achsschenkelbolzens 4 können die Querlenkerlagerungen 7, 11 als Kugelgelenke oder Molekulargelenke ausgeführt sein, wobei auch eine Ausgestaltung der Querlenkerlagerungen 7, 11 des oberen und unteren Querlenkers 10, 14 als Rollenlager möglich ist, wie anhand Figur 12 veranschaulicht.

Hierbei ist der Achsschenkelbolzen 4 einteilig ausgeführt, wobei die Gelenkköpfe 40, 41 für die Querlenkerlagerungen 7, 11 als separate Teile ausgeführt sind, und mit dem Achsschenkelbolzen 4 beispielsweise mittels eines Einschraubgewindes 42 am Achsschenkelbolzen 4 verbindbar sind, wobei das dem Gelenkkopf zugewandte Ende des Achsschenkelbolzens 4 vorzugsweise kegelstumpfförmig ausgeführt ist, um eine weitgehende Spielfreiheit zu ermöglichen. Gemäß der Erfindung kann lediglich ein Gelenkkopf 40, 41 als separates Teil ausgeführt sein.

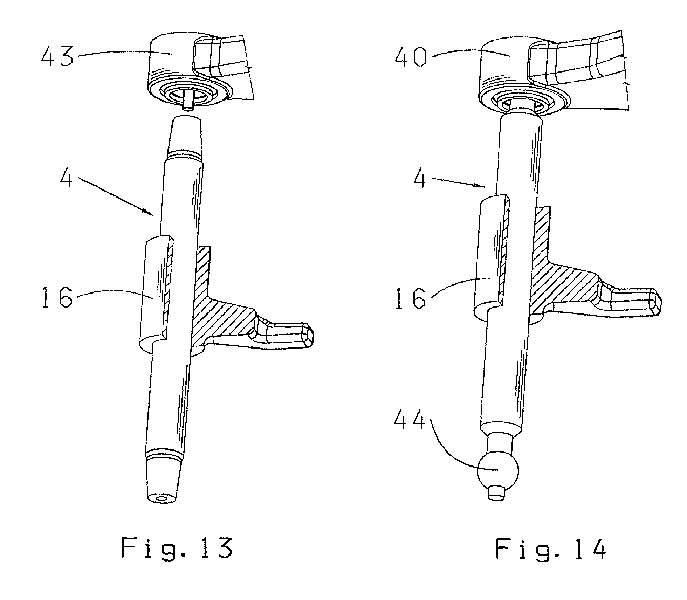

In Figur 13 ist ein Ausführungsbeispiel dargestellt, bei dem der Achsschenkelbolzen 4 einteilig ausgeführt ist, wobei die Querlenkerlagerungen 7, 11 als Kugel- oder Molekulargelenke 43 ausgeführt sind, die auf das jeweilige Ende des Achsschenkelbolzens 4 aufgeschraubt werden.

Bei dem in Figur 14 gezeigten Ausführungsbeispiel ist der Achsschenkelbolzen 4 einteilig ausgeführt, wobei an den Enden des Achsschenkelbolzens 4 jeweils ein Kugel- oder Molekulargelenkkopf 44 integriert ist, wobei die Gelenkmontage mit der Querlenkermontage erfolgt. In Figur 14 ist der obere Gelenkkopf 40 im montierten Zustand gezeigt, wobei am anderen Ende des Achsschenkelbolzens 4 der integrierte Kugel- oder Molekulargelenkkopf 44 vor der Querlenkermontage gezeigt ist.

Selbstverständlich fällt auch jede konstruktive Ausbildung, insbesondere jede räumliche Anordnung der Bauteile der erfindungsgemäßen Einzelradaufhängung an sich sowie zueinander und soweit technisch sinnvoll, unter den Schutzumfang der vorliegenden Ansprüche, ohne die Funktion der Einzelradaufhängung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Achsschenkel
- 2: Aufnahme
- 3: Aufnahme
- 4: Achsschenkelbolzen
- 5: Drehachse
- 6: Fahrzeugrad
- 7: Lagerung
- 8: Querlenkerarm
- 9: Querlenkerarm
- 10: Querlenker
- 11: Lagerung
- 12: Querlenkerarm
- 13: Querlenkerarm
- 14: Querlenker
- 15: Felge
- 16: Träger, Federträger
- 17: Feder-Dämpfer-Modul
- 18: Dämpfer
- 19: Luftfeder

## Patentansprüche

1. Einzelradaufhängung, mit einem um eine Drehachse (5) drehbar angeordneten Achsschenkel (1), welcher sich auf einem Federträger (16) abstützt, der über einen Dämpfer (18) und eine Luftfeder (19) oder über ein Feder-Dämpfer-Modul (17) mit dem Fahrzeugrahmen verbunden ist, wobei der Achsschenkel (1) über einen Achsschenkelbolzen (4) mit dem Federträger (16) verbunden ist, wobei die Einzelradaufhängung mindestens einen oberen Querlenker (10) und mindestens einen unteren Querlenker (14) aufweist, wobei die Querlenker (10, 14) am oberen Ende bzw. am unteren Ende des Achsschenkelbolzens (4) gelagert sind, wobei der Achsschenkel (1) und die Querlenker (10, 14) schwenkbar zum Achsschenkelbolzen (4) gelagert und der Federträger (16) drehfest mit dem Achsschenkelbolzen (4) verbunden ist, wobei der Achsschenkelbolzen (4) das Verbindungsglied für Federträger (16), Achsschenkel (1) und oberen und unteren Querlenker (10, 14) bildet, **dadurch gekennzeichnet, dass** der Achsschenkelbolzen (4) einteilig ausgeführt ist, wobei an den Enden des Achsschenkelbolzens (4) jeweils ein Kugel- oder Molekulargelenkkopf (44) integriert ist, wobei die Gelenkmontage mit der Querlenkermontage erfolgt.

## Claims

1. Independent wheel suspension system, having a steering knuckle (1) which is arranged such that it can be rotated about a rotational axis (5) and is supported on a spring support (16) which is connected to the vehicle frame via a damper (18) and a pneumatic spring (19) or via a spring/damper module (17), the steering knuckle (1) being connected to the spring support (16) via a kingpin (4), the independent wheel suspension system having at least one upper transverse link (10) and at least one lower transverse link (14), the transverse links (10, 14) being mounted at the upper end and at the lower end, respectively, of the kingpin (4), the steering knuckle (1) and the transverse links (10, 14) being mounted pivotably with respect to the kingpin (4), and the spring support (16) being connected fixedly to the kingpin (4) so as to rotate with it, the kingpin (4) forming the connecting member for the spring support (16), steering knuckle (1) and upper and lower transverse links (10, 14), **characterized in that** the kingpin (4) is configured in one piece, in each case one ball joint head or molecular joint head (44) being integrated at the ends of the kingpin (4), the joint mounting taking place with the transverse link mounting.

## Revendications

1. Suspension à roues indépendantes, comprenant une fusée d'essieu (1) disposée de manière rotative autour d'un axe de rotation (5), qui s'appuie sur un support à ressort (16) qui est connecté par le biais d'un amortisseur (18) et d'un ressort pneumatique (19) ou par le biais d'un module ressort-amortisseur (17) au châssis du véhicule, la fusée d'essieu (1) étant connectée par le biais d'un pivot de fusée d'essieu (4) au support à ressort (16), la suspension à roues indépendantes présentant au moins un bras oscillant transversal supérieur (10) et au moins un bras oscillant transversal inférieur (14), les bras oscillants transversaux (10, 14) étant supportés à l'extrémité supérieure ou à l'extrémité inférieure du pivot de fusée d'essieu (4), la fusée d'essieu (1) et les bras oscillants transversaux (10, 14) étant supportés de manière pivotante par rapport au pivot de fusée d'essieu (4) et le support à ressort (16) étant connecté de manière solidaire en rotation au pivot de fusée d'essieu (4), le pivot de fusée d'essieu (4) formant l'organe de liaison pour le support à ressort (16), la fusée d'essieu (1) et les bras oscillants transversaux supérieur et inférieur (10, 14), **caractérisée en ce que** le pivot de fusée d'essieu (4) est réalisé d'une seule pièce, une tête d'articulation sphérique ou moléculaire étant à chaque fois intégrée aux extrémités du pivot de fusée d'essieu (4), le montage articulé s'effectuant avec le montage des bras oscillants transversaux.
